# EUROPÄISCHE PATENTSCHRIFT

(11) **EP 0 854 554 B1**
(45) Veröffentlichungstag und Bekanntmachung des Hinweises auf die Patenterteilung: **28.04.2004**
(21) Anmeldenummer: 97121577.7
(22) Anmeldetag: 08.12.1997
(51) Int. Cl.: H02G 3/18

(54) **Installationsgerät**
Installation apparatus
Appareillage d'installation

(30) Priorität: 20.01.1997 DE 19701730
(43) Veröffentlichungstag der Anmeldung: 22.07.1998
(73) Patentinhaber: ABB PATENT GmbH, 68526 Ladenburg (DE)
(72) Erfinder: Claus, Frank Michael, Dipl.-Ing., 58511 Lüdenscheid (DE)
(74) Vertreter: Miller, Toivo

(56) Entgegenhaltungen:
- EP-A- 0 654 881
- DE-U- 7 030 837

## Beschreibung

Die Erfindung betrifft ein elektrisches Installationsgerät zur Unterputzmontage an einer Montagewand, vorzugsweise in einer standardisierten Wandeinbaudose, mit einem Tragring und mit wenigstens einer daran befestigten Spreize als Haltemittel zur Verankerung des Installationsgerätes in der Montagewand, welche Spreize mittels einer am Tragring in einer Lasche geführten Stellschraube betätigbar ist, indem der Schraubenkopf beim Einschrauben der Stellschraube einen an der Spreize angeformten, durch die Lasche hindurchgreifenden Stützring beaufschlagt und hierdurch das entgegengesetzte Ende der Spreize nach außen gegen die Innenwand der Einbauöffnung bewegt.

Ein derartiges Installationsgerät ist aus der EP-A-0 654 881 bekannt. Die federnd rückstellbaren Spreizkrallen werden mittels Stellschrauben in ihre Spreizstellung gebracht.

Die Verwendung von Spreizen zur Befestigung beziehungsweise Verankerung von elektrischen Installationsgeräten in normmäßigen Wandeinbaudosen ist allgemein bekannt. Hierbei sind üblicherweise zwei diametral gegenüberliegend angeordnete Spreize vorgesehen und, wie vorstehend angegeben, am ebenfalls allgemein gebräuchlichen Tragring geführt.

Durch Betätigung der jeder Spreize zugeordneten Stellschrauben werden die Spreizen infolge Hebelwirkung nach außen beaufschlagt, wobei sie sich an die jeweilige Innenwand der betreffenden Wandausnehmung, zum Beispiel normmäßige Wandeinbaudose, anlegen und mittels hierfür vorgesehener Zacken oder Krallen form- und kraftschlüssig halten. Dieses Funktionsprinzip bedeutet, daß sowohl bei der Erstmontage als auch bei einer möglichen Demontage des Installationsgerätes, sei es zum Auswechseln oder lediglich zu Reparaturzwecken, jeweils die Stellschrauben betätigt werden müssen, was häufig mühsam ist. Insbesondere bei der Erstmontage, wenn aufgrund unzureichender Helligkeit die Stellschrauben nicht so leicht wahrgenommen werden, besteht das Problem, daß der Monteur mit seinem Drehwerkzeug, mit denen er die Stellschrauben betätigt, vom Schraubenkopf abgleitet und dann aufgrund der unzureichenden Helligkeit diesen nicht sogleich auffindet. In solchen Situationen kann die Schraubarbeit als lästig empfunden werden, da sie sich übermäßig hinzieht und das Arbeitsergebnis beeinträchtigt.

Aus der DE-U 70 30 837 ist ein elektrisches Installationsgerät zur Unterputzmontage in einer Wandeinbaudose bekannt, bei dem Spreizkrallen als elastisch federnde Blechbiegeteile ausgebildet und schwenkbar in schraubenlose Halterungen am Installationsgerät derart angeordnet sind, daß sie durch Einschieben von außen zu betätigender Montageschieber federnd an die seitliche Gehäusewand gedrückt werden und durch Herausziehen der Montageschieber das Installationsgerät freigeben.

Ausgehend von diesem Stand der Technik ist es Aufgabe der vorliegenden Erfindung, ein Installationsgerät der eingangs genannten Art anzugeben, welches einfach gestaltet ist und über einfach einzustellende Spreizen verfügt.

Diese Aufgabe wird erfindungsgemäß durch die Merkmale des Patentanspruchs 1 gelöst. Weitere vorteilhafte Ausgestaltungen und Merkmale sind in den Unteransprüchen angegeben.

Entsprechend der Erfindung ist zwischen dem Schraubenkopf und dem Stützring der Spreize ein verschieblicher Keil angeordnet, dessen eine Keilfläche sich am Schraubenkopf abstützt und dessen gegenüberliegende Keilfläche den Stützring beaufschlagt. Mit dieser zusätzlichen Ausstattung ist es dem Monteur nunmehr möglich, die Montage eines UP-Installationsgerätes in sehr kurzer Zeit sicher und zuverlässig auszuführen.

Vorteilhafterweise ist der Keil in Umfangsrichtung verschieblich am Tragring geführt und gestattet so eine einfache Handhabung ohne zusätzlichen, konstruktive Änderungen verursachenden Raumbedarf.

Entsprechend einer bevorzugten Ausführungsform der Erfindung ist der Keil von Hand betätigbar und weist hierzu eine den Tragring erreichende oder übergreifende Nase auf, welche es erlaubt, ohne zusätzliches Werkzeug das Installationsgerät vorzumontieren, das heißt, so in der Wandausnehmung zu befestigen, daß es darin gehalten ist, ohne herauszufallen. Der beauftragte Monteur muß nach Verschieben des zur Beaufschlagung der Spreize vorgesehenen Keils von Hand die Stellschraube lediglich festdrehen, das heißt höchstens eine Schraubendrehung. Da er beim Ansetzen des Schraubendrehers bereits einen Drehwiderstand verspürt, besteht auch nicht mehr das Problem des Abrutschens der Schraubendreherklinge wie bei Installationsgeräten mit herkömmlichen Spreizen.

Im Sinne einer kostengünstigen Herstellung ist der Keil als Blech-Stanz-/Biegeteil gefertigt. Dabei wird zunächst das komplette "Keilstück" ausgestanzt, das etwa rautenförmig mit einer Oberkante, mit je einer kurzen und einer langen Seitenkante und mit einer angeschrägten Unterkante. Dann erfolgt die Verformung des Keilstücks zu einem an den Tragring angepaßter Bogen, so daß der Keil entsprechend dem Radius des Tragrings gekrümmt ist.

In dieses Keilstück wird entsprechend einer Ausgestaltung der Erfindung eine Ausnehmung eingestanzt, die eine rechteckförmige Öse bildet, in welche der Schraubenkopf der zugeordneten Stellschraube eingreift. Die Länge der Öse ist dabei entsprechend einer maximalen Verstellung der Spreize vorgesehen, wobei die angeschrägte Unterkante des Keils im montierten Zustand am Stützring der Spreize aufliegt.

Eine weitere vorteilhafte Ausgestaltung sieht vor, daß der Keil zwischen der Stellschraube und der tragringseitigen Lasche eingefügt ist, wobei der Keil vom Schraubenschaft der Stellschraube gegen die tragringseitige Lasche beaufschlagt ist und der Keil in Längsrichtung von dem in die Öse eingreifenden Schraubenkopf gehalten ist.

Gemäß einer vorteilhaften Weiterbildung ist die Spreize mit einer Rückstellfeder versehen, welche die Spreize in ihre Ruhestellung beaufschlagt, in welcher die Spreize an der Lasche angelegt ist. Die Rückstellfeder ist hierbei als Blattfeder ausgebildet ist, die sich an der Außenseite der Lasche abstützt und so ebenfalls für eine vergleichsweise stabile Position der Spreize wie auch des zugeordneten Keils sorgt.

Diese und weitere vorteilhafte Ausgestaltungen und Weiterbildungen der Erfindung sind in den Unteransprüchen gekennzeichnet.

Anhand eines in der schematischen Zeichnung dargestellten Ausführungsbeispiels sollen die Erfindung, vorteilhafte Ausgestaltungen und Verbesserungen sowie besondere Vorteile der Erfindung näher erläutert und beschrieben werden.

Es zeigen:
- Fig. 1: eine ausschnittweise Vergrößerung eines Installationsgerätes mit einem erfindungsgemäßen Keil im Querschnitt;
- Fig. 2: eine Seitenansicht des Installationsgerätes nach Fig. 1 und
- Fig. 3: eine weitere, um 90° gegenüber der Darstellung in Fig. 2 gedrehte Seitenansicht des erfindungsgemäßen Installationsgerätes.

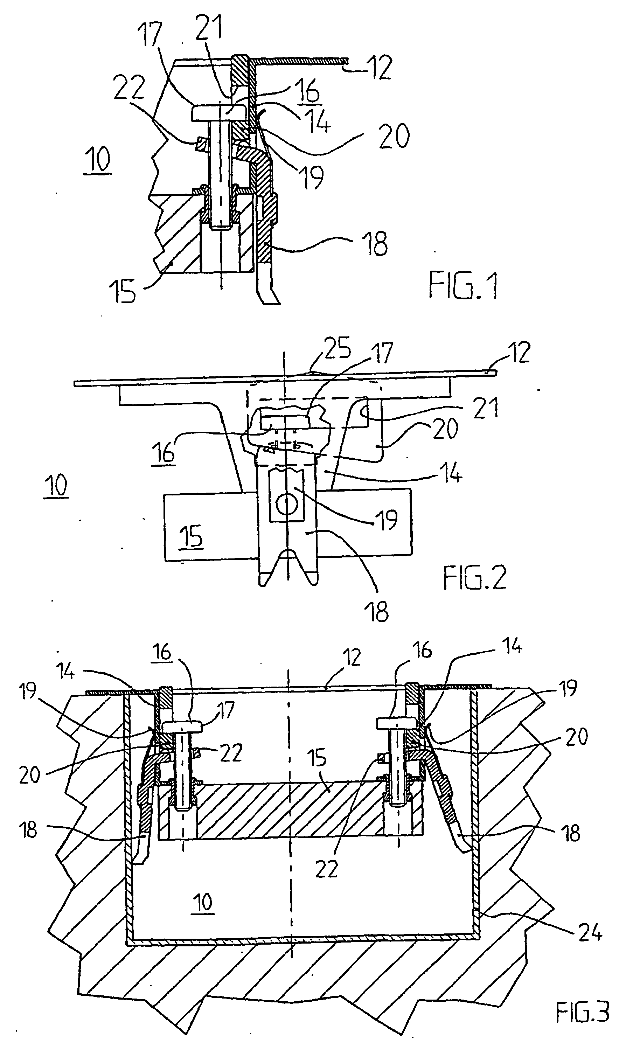

In Fig. 1 ist eine ausschnittweise Vergrößerung eines Installationsgerätes 10 für den Wandeinbau, das heißt für die Unterputzmontage, wiedergegeben, das mit einem Tragring 12, einer hieran rechtwinklig angeformten Lasche 14, einem Sockel 15 und einer hierin geführten Stellschraube 16 versehen ist, die in bekannter Weise eine Spreize 18 zur Verankerung des Installationsgerätes 10 beziehungsweise einen daran winklig angeformten Stützring 22 beaufschlagt. Die Spreize ist ihrerseits von einer zur Rückstellung dienenden Blattfeder 19 beaufschlagt.

Ferner ist in dieser Darstellung ein zusätzliches Teil im Querschnitt gezeigt, das anhand der in Fig. 2 gezeigten Seitenansicht der Anordnung gemäß Fig. 1 als erfindungsgemäßer Keil 20 erkennbar ist.

Aus diesen beiden Darstellungen ist einerseits die Einbaulage des erfindungsgemäßen Keils 20 ersichtlich, der zur Schnellverstellung der von ihm zusätzlich zur Stellschraube 16 beaufschlagten Spreize 14 dient, sowie die Gestaltung des Keils 20 mit einer rechteckförmigen Ausnehmung 21, in welche der Schraubenkopf 17 der Stellschraube 16 seitlich eingreift und sich auf die nach oben weisende Kante der Ausnehmung 21 auflegt, während die Unterkante des Keils 20 angeschrägt ist und auf dem Stützring aufliegt. Die Handhabung des Keils 20 erfolgt derart, daß er quer zur Lasche 14 zwischen den Schraubenkopf der Stellschraube 16 und der Spreize 18, nämlich dem an der Spreize 18 im Winkel angeformten und die Lasche 14 durchgreifenden Stützring 22 eingefügt ist und soweit seitlich verschoben wird, bis das freie Ende der Spreize 18 an der betreffenden Montageinnenwand, im allgemeinen eine standardisierte Wandeinbaudose 24, wie in Fig. 3 gezeigt, anliegt. Ferner ist anhand der in Fig. 2 gezeigten Seitenansicht des erfindungsgemäßen Keils, dessen verdeckte Kontur mittels gestrichelter Linien gezeigt ist, zu erkennen, daß an der Oberseite des Keils 20 eine Nase 25 angeformt ist, welche geringfügig übersteht, das heißt über dem Tragring herausragt,. Diese Nase 25 dient der manuellen Betätigung des Keils 20.

In Fig. 3 ist ein entsprechend den Fig. 1 und 2 mit einem Keil 20 versehenes Installationsgerät 10 in Einbaulage in einer Wandeinbaudose 24 im Längsschnitt wiedergegeben, um die unterschiedlichen Einstellmöglichkeiten des erfindungsgemäßen Keils 20 zu verdeutlichen.

Wie bereits erwähnt, dient der Keil 20 der Schnelleinrichtung des betreffenden Installationsgerätes 10 in der betreffenden Einbaudose 24, die geringfügig größer ist als der Abstand der in Ruhestellung befindlichen Spreizen 18.

Diese Differenz ist erforderlich, um das betreffende Installationsgerät exakt zu anderen, hier nicht dargestellten Installationsgeräten ausrichten zu können, falls zum Beispiel die Wandausnehmungen für die einzelnen Installationsgeräte nicht miteinander fluchten. In solchen Fällen kann rasch ohne Werkzeug das betreffende Installationsgerät ausgerichtet und fixiert werden, indem die den Spreizen zugeordneten Keile entsprechend weit seitlich verschoben werden und so den Abstand zwischen dem Stützring 22 und dem Schraubenkopf 17 der Stellschraube 16 einstellen. Hierbei liegt der Schraubenkopf 17 an der oberen Kante der Keilfläche des Keils 20, während sich dessen angeschrägte Unterkante am Stützring 22 auflegt und diesen entsprechend beaufschlagt.

Dieses vorausgeschickt ist anhand der in Fig. 3 gezeigten Ansicht nachvollziehbar, daß das Installationsgerät innerhalb bestimmter Grenzen innerhalb der Wandeinbaudose 24 seitlich verlagert werden kann und daß hierbei die Spreize 18 eine jeweils unterschiedliche Neigung aufweist. Dementsprechend ist der Abstand zwischen dem Schraubenkopf 17 der auf die Ruhestellung der Spreize 18 eingestellten Stellschraube 16 und dem Stützring 22 unterschiedlich.
Diese Wegdifferenz wird manuell mittels des erfindungsgemäßen Keils 20 durch dessen seitliche Verschiebung ausgeglichen, so daß zuletzt nur noch die Stellschraube 16 ein wenig angezogen werden muß, um die Einbaulage zu sichern.

## Patentansprüche

1. Elektrisches Installationsgerät (10) zur Unterputzmontage an einer Montagewand, vorzugsweise in einer standardisierten Wandeinbaudose (24), mit einem Tragring (12) und mit wenigstens einer daran befestigten Spreize (18) als Haltemittel zur Verankerung des Installationsgerätes (10) in der Montagewand, welche Spreize (18) mittels einer am Tragring (12) in einer Lasche (14) geführten Stellschraube (16) betätigbar ist, indem deren Schraubenkopf (17) beim Einschrauben der Stellschraube (16) einen an der Spreize (18) angeformten, durch die Lasche (14) hindurchgreifenden Stützring (22) beaufschlagt und hierdurch das entgegengesetzte Ende der Spreize (18) nach außen gegen die Innenwand der Einbauöffnung (24) bewegt, **dadurch gekennzeichnet, daß** zwischen dem Schraubenkopf (17) und dem Stützring (22) der Spreize (18) ein verschieblicher Keil (20) angeordnet ist, dessen eine Keilkante sich am Schraubenkopf (17) abstützt und dessen gegenüberliegende Kante den Stützring (22) beaufschlagt.

2. Elektrisches Installationsgerät nach Anspruch 1, **dadurch gekennzeichnet, daß** der Keil (20) in Umfangsrichtung verschieblich am Tragring (12) geführt ist.

3. Elektrisches Installationsgerät nach Anspruch 1 oder 2, **dadurch gekennzeichnet, daß** der Keil (20) handbetätigbar ist und hierzu eine den Tragring (12) erreichende oder übergreifende Nase (25) aufweist.

4. Elektrisches Installationsgerät nach einem der Anspruch 1, 2 oder 3, **dadurch gekennzeichnet, daß** der Keil (20) als Blech-Stanz-/Biegeteil gefertigt ist.

5. Elektrisches Installationsgerät nach einem der vorherigen Ansprüche, **dadurch gekennzeichnet, daß** der Keil (20) entsprechend dem Radius des Tragrings (12) gekrümmt ist und zwischen der Stellschraube (16) und der tragringseitigen Lasche (14) eingefügt ist.

6. Elektrisches Installationsgerät nach einem der vorherigen Ansprüche, **dadurch gekennzeichnet, daß** der Keil (20) vom Schraubenschaft der Stellschraube (16) gegen die tragringseitige Lasche (14) beaufschlagt ist.

7. Elektrisches Installationsgerät nach einem der vorherigen Ansprüche, **dadurch gekennzeichnet, daß** der Keil (20) eine rechteckförmige Öse (21) aufweist, in welche der Schraubenkopf (17) seitlich eingreift, daß die horizontale Länge der Öse (21) entsprechend einer maximalen Verstellung der Spreize (18) vorgesehen ist, und daß die angeschrägte Unterkante des Keils (18) am Stützring (22) der Spreize (18) aufliegt.

8. Elektrisches Installationsgerät nach einem der vorherigen Ansprüche, **dadurch gekennzeichnet, daß** die Spreize (18) mit einer Rückstellfeder (19) versehen ist, welche die Spreize (18) in ihre Ruhestellung beaufschlagt, in welcher die Spreize (18) an der Lasche (14) angelegt ist.

9. Elektrisches Installationsgerät nach Anspruch 8, **dadurch gekennzeichnet, daß** die Rückstellfeder (19) als Blattfeder ausgebildet ist, die sich an der Außenseite der Lasche (14) abstützt.

## Claims

1. An electric installation device (10) for flush mounting in a mounting wall, preferably in a standardized flush-type wall socket outlet (24), comprising a carrying ring (12) and with at least one brace (18) attached thereto as a holding means for anchoring the installation device (10) in the mounting wall, which brace (18) can be actuated by means of an adjusting screw (16) guided on the carrying ring (12) in a bracket (14), such that its screw head (17), when the adjusting screw (16) is screwed in, pressurizes a supporting ring (22) shaped on the brace (18) and penetrating the bracket (14), and thus moves the opposite end of the brace (18) outwardly against the inner wall of the installation opening (24), **characterized in that** a displaceable wedge (20) is arranged between the screw head (17) and the supporting ring (22) of the brace (18), with edge of said wedge resting on the screw head (17) and its opposite edge pressurizing the supporting ring (22).

2. An electric installation device as claimed in claim 1, **characterized in that** the wedge (20) is displaceably guided in the circumferential direction on the carrying ring (12).

3. An electric installation device as claimed in claim 1 or 2, **characterized in that** the wedge (20) can be actuated by hand and is provided for this purpose with a nose (25) reaching or extending beyond the carrying ring (12).

4. An electric installation device as claimed in one of the claims 1, 2 or 3, **characterized in that** the wedge (20) is made as a punched or bent sheet-metal part.

5. An electric installation device as claimed in one of the preceding claims, **characterized in that** the wedge (20) is curved according to the radius of the carrying ring (12) and is inserted between the adjusting screw (16) and the bracket (14) on the side of the carrying ring.

6. An electric installation device as claimed in one of the preceding claims, **characterized in that** the wedge (20) is pressurized by the shank of the adjusting screw (16) against the bracket (14) on the side of the carrying ring.

7. An electric installation device as claimed in one of the preceding claims, **characterized in that** the wedge (20) comprises a rectangular eye (21) into which the screw head (17) engages laterally, that the horizontal length of the eye (21) is provided according to a maximum adjustment of the brace (18) and that the beveled lower edge of the wedge (18) rests on the supporting ring (22) of the brace (18).

8. An electric installation device as claimed in one of the preceding claims, **characterized in that** the brace (18) is provided with a return spring (19) which pressurizes the brace (18) in its idle position in which the brace (18) rests on the bracket (14).

9. An electric installation device as claimed in claim 8, **characterized in that** the return spring (19) is arranged as a leaf spring which rests on the outside of the bracket (14).

## Revendications

1. Appareillage électrique d'installation (10) pour montage encastré dans une paroi, de préférence à l'intérieur d'un coffret standard (24) encastrable dans une paroi, comportant une bague porteuse (12) et au moins un élément d'expansion (18) fixé à celle-ci en tant qu'élément de maintien assurant l'ancrage de l'appareillage (10) dans la paroi, cet élément d'expansion (18) pouvant être actionné par une vis de réglage qui se visse dans une patte (14) de la bague porteuse (12), en actionnant par sa tête (17) une bague d'appui (22) formée sur l'élément d'expansion (18) et traversant la patte (14), de sorte que l'extrémité opposée de l'élément d'expansion (18) est déplacée vers l'extérieur contre la paroi interne de l'ouverture d'encastrement (24), **caractérisé en ce qu'**entre la tête de vis (17) et la bague d'appui (12) de l'élément d'expansion (18) est monté un coin coulissant (20) dont un bord est en appui sur la tête de vis (17), tandis que le bord opposé actionne la bague d'appui (22).

2. Appareillage électrique d'installation selon la revendication 1, **caractérisé en ce que** le coin (20) peut coulisser en direction périphérique sur la bague porteuse (12).

3. Appareillage électrique d'installation selon la revendication 1 ou 2, **caractérisé en ce que** le coin (20) peut être actionné à la main et, pour cela, il porte un nez (25) atteignant ou dépassant la bague porteuse (12).

4. Appareillage électrique d'installation selon une des revendications 1, 2 ou 3, **caractérisé en ce que** le coin (20) est fabriqué en tôle pliée et découpée.

5. Appareillage électrique d'installation selon une des revendications précédentes, **caractérisé en ce que** le coin (20) est recourbé selon un rayon correspondant à celui de la bague porteuse (12), et qu'il est introduit entre la vis (16) et la patte (14) située du côté de la bague porteuse.

6. Appareillage électrique d'installation selon une des revendications précédentes, **caractérisé en ce que** le coin (20) est appliqué par la tige de la vis (16) contre la patte (14) liée à la bague porteuse.

7. Appareillage électrique d'installation selon une des revendications précédentes, **caractérisé en ce que** le coin (20) présente une découpe (21) de forme rectangulaire, dans laquelle est engagée la tête de vis (17) et dont la longueur horizontale correspond à la longueur maximale prévue pour le déplacement de l'élément d'expansion (18), le bord inférieur oblique du coin (18) étant appliqué sur la bague d'appui (22) de l'élément d'expansion (18).

8. Appareillage électrique d'installation selon une des revendications précédentes, **caractérisé en ce que** l'élément d'expansion (18) est équipé d'un ressort de rappel qui tend à le ramener à la position de repos dans laquelle cet élément est appliqué sur la patte (14).

9. Appareillage électrique d'installation selon la revendication 8, **caractérisé en ce que** le ressort de rappel (19) est un ressort à lame qui s'appuie sur la face externe de la patte (14).
